# EUROPEAN PATENT SPECIFICATION

(11) **EP 1 162 429 B1**
(45) Date of publication and mention of the grant of the patent: **26.11.2014**
(21) Application number: 01103859.3
(22) Date of filing: 16.02.2001
(51) Int. Cl.: G01B 7/16

(54) **Strain link drawn from a plate**
Tiefgezogener Dehnungsmesser
Dispositif de mesure de dilatation embouti par presse

(30) Priority: 08.06.2000 IT MI001281
(43) Date of publication of application: 12.12.2001
(73) Proprietor: S2Tech S.r.l., 20122 Milano (IT)
(72) Inventor: Piardi, Silvio, 20146 Milano (IT); Piardi, Dario, 20144 Milano (IT)
(74) Representative: Simino, Massimo

(56) References cited:
- EP-A- 0 969 265
- JP-A- 58 111 702
- NL-A- 8 303 744
- US-A- 3 782 182
- US-A- 3 937 075

## Description

The present invention refers to a process for production of a strain link and to a corresponding link for measuring the mechanical stresses to which a load bearing structure is subjected.

In a great many technical applications it is very important to know the magnitude of the mechanical stresses to which a structure is subjected.

The mechanical stresses to which a structure is subjected can be identified as physical quantities, such as compressive stress, tensile stress, bending stress, shearing stress, for example.

Said mechanical stresses can be measured by means of instruments known to the art, such as, for example, transducers capable of converting a physical quantity into an electrical signal proportional to the value thereof.

For this purpose the transducer for measuring mechanical stresses comprises a body that is subjected to the physical quantity to be measured and a sensor that converts that physical quantity into an electrical signal.

The sensor can be a metal or semiconductor strain gauge or an inductive, proximity, optical or magnetic sensor, etc. The sensor can be applied to the body of the transducer, by cement or other techniques, so as to detect the deformation of the body that occurs when it is subjected to stress.

Normal or unitary stresses (that is to say the stress per unit of length, area or volume) applied to said structure are generally too low to be measured locally by a sensor applied directly thereon.

It is therefore necessary to resort to an expedient for mechanical amplification of the stress applied to the structure. Such mechanical amplification of the stress is provided by a link that connects the structure to a sensor.

The body of the link is generally made in one piece, substantially bridge-shaped, and comprises three functional parts: two end fastening or supporting parts, a central measuring area and two lateral connecting parts.

The fastening parts keep the central part of the body raised with respect to the structure. They are provided with means for fastening to the structure, such as holes to receive screws, for example. However, fastening of the link to the structure can be carried out by other fastening means such as welding and the like, such as to avoid shifting of the link with respect to the structure. In fact the link must be integral with the structure on which the measurement of stress is to be carried out.

The central measuring area is disposed between the fastening parts and is intended to receive a sensor for detection of the stress to which the structure is subjected. The central measuring area has a reduced section with respect to the other parts of the link so that it can be subjected to a greater extent to the stresses to be measured.

The lateral connecting parts connect the end parts to the central measuring area. The lateral connecting parts have a larger section with respect to the central measuring area so that the normal stress therein is negligible with respect to the normal stress in the central measuring area.

When the link is applied to a structure, the normal stress to which said structure is subjected is transferred to the central measuring area in which it is multiplied by a multiplying coefficient equal to the distance between the two end parts divided by the length of the central area. Consequently the sensor applied in the central area of the link will detect a stress equal to the normal stress of the structure multiplied by said multiplying coefficient.

The body of the link is generally made of the same material forming the structure on which it must be applied, or in any case of a material having the same or nearly the same thermal expansion coefficient as the structure to which it is to be applied. Since links for measuring stress are often applied to steel structures, they are generally made of steel.

Prior art links for measuring stresses are made from metal bars by chip-forming machining. Said machining consists in milling (turning) and drilling. Starting from a metal bar, material is removed from the central part by milling, so as to give the bar a bridge shape with two end fastening parts. Holes are formed by drilling of the end fastening parts for fastening of the link to the structure.

This known method for production of links for measuring stresses requires long machining times and waste of labour and consequently it proves costly.

Another method for production of links for measuring stresses is known to the art, in which, starting from a flat bar, a link is obtained by shearing in the form of a rectangular plate on which holes are made by drilling.

In order to use this link, it is necessary for the central area in which the sensor is situated to be separated from the surface of the structure on which stress is to be measured.

The separation between the surface of the structure and the central area of the link is obtained by means of further machining to lower the same structure, by which the surface of said structure destined to be situated beneath the central part of the link is lowered. It is obvious that said method proves inconvenient because it requires a further machining process before mounting of the link.

Alternatively, two distance plates can be interposed between the link and the surface of the structure, disposed at the two ends of the link, so that the central part of the link is separated from the surface of the structure.

Two separate plates with holes can be provided, which are fastened by means of screws to the ends of the link and to the structure. Otherwise a further welding process can be carried out for fastening the plates to the structure.

It is obvious that such a method is inconvenient because of the further production process required to produce the distance plates and for fastening thereof to the link and/or to the structure.

A further method for production of links for measuring stresses is known, for example, from US-A-3 937 075, where a central portion accommodating the strain gauges is manufactured from a strip of material by flanging at least a part of its longitudinal sides, so that a U-shaped profile is obtained.

**A link for measuring stresses comprising a central portion and two lateral portions, which must be connected through blocking means to the structure whose stresses have to be measured, is known - for example - from** EP-A-969 265**. According to an embodiment thereof, two "S"-shaped portions, positioned between the lateral portions and the central portion of the measuring link, are provided.**

Furthermore, in the links according to the prior art, the thickness of the end supporting parts is greater than the thickness of the central measuring part. Consequently the portion of the fastening screws engaged in the end supporting parts is excessively long and therefore the join between link and structure is less integral, with the possibility of sliding of the parts relative to one another. This results in a hysteresis and a poor reproducibility of the measurement.

The object of the present invention is to eliminate the drawbacks of the prior art, providing a procedure for production of a link for measuring static and dynamic stresses that is economical, simple and rapid.

This object is achieved in accordance with the invention with the characteristics listed in appended independent claim 1.

Another object of the present invention is to provide a link that permits a good accuracy of measurement and at the same time simple installation.

This object is achieved in accordance with the invention with the characteristics listed in appended independent claim 5.

Advantageous embodiments of the invention are apparent from the dependent claims.

By means of numerous experimental tests and structural analyses, some performed with the aid of computerized means such as CAD software, the applicant has ascertained that a link for measuring stresses can be created in a single piece, without the need to carry out chip-forming machining on the bar from which the link is obtained or on the structure to which the link must be applied.

The process according to the invention provides for the production of a link starting from a flat band, by means of blanking operations to obtain the body of the link and the fastening holes, and drawing to obtain the central part of the link raised with respect to the fastening parts.

Such a procedure can be performed by means of a progressive blanking die. A progressive blanking die is a single die with a plurality of impressions. Each impression performs a production phase (for example, blanking, drilling, drawing, etc.) with progressive feeding. When all the production phases are active a finished piece will be discharged with each strike.

The method according to the invention allows a considerable reduction of costs with respect to methods of the prior art. In fact the initial expense due to construction of the die is rapidly amortized by the high output of links. This production method is extremely rapid and requires a minimum waste of labour and material.

With said method a strain link is obtained having a central part that is raised with respect to the end supporting parts. The length of the central measuring part is smaller than the length of the other parts of the link and the thickness of the end supporting parts is more or less the same as the initial thickness of the band from which the link is obtained.

The link obtained with the process according to the invention has such a shape as to simplify considerably installation thereof on a structure on which stresses must be measured. In fact drawing of the end fastening parts avoids the use of distance plates.

Moreover the technical characteristics of the strain link obtained with the process according to the invention are superior to those of links of the prior art. In fact the thickness of the supporting parts of the link is reduced with respect to that of links of the prior art. Consequently the portion of screw engaged in the holes in the supporting parts is shorter, has less total elongation and therefore the sliding between the link and the structure is minimal. This results in good reproducibility and a low hysteresis of the measurement.

Further characteristics of the invention will be made clearer by the detailed description that follows, referring to a purely exemplary and therefore non-limiting embodiment thereof, illustrated in the appended drawings, in which:
Figure 1 is a diagram schematically illustrating a process for production of a strain link for measuring stresses according to the invention;
Figure 2 is a top plan view of the link for measuring stresses obtained with the process according to the invention;
Figure 3 is a side elevation view of the link of Figure 2;
Figure 4 is a perspective view of the link of Figure 2;
Figure 5 is a perspective view illustrating the link in Figure 4 applied to a structure and carrying an electric cable;
Figure 6 is a perspective view, like Figure 5, but taken from another angle.

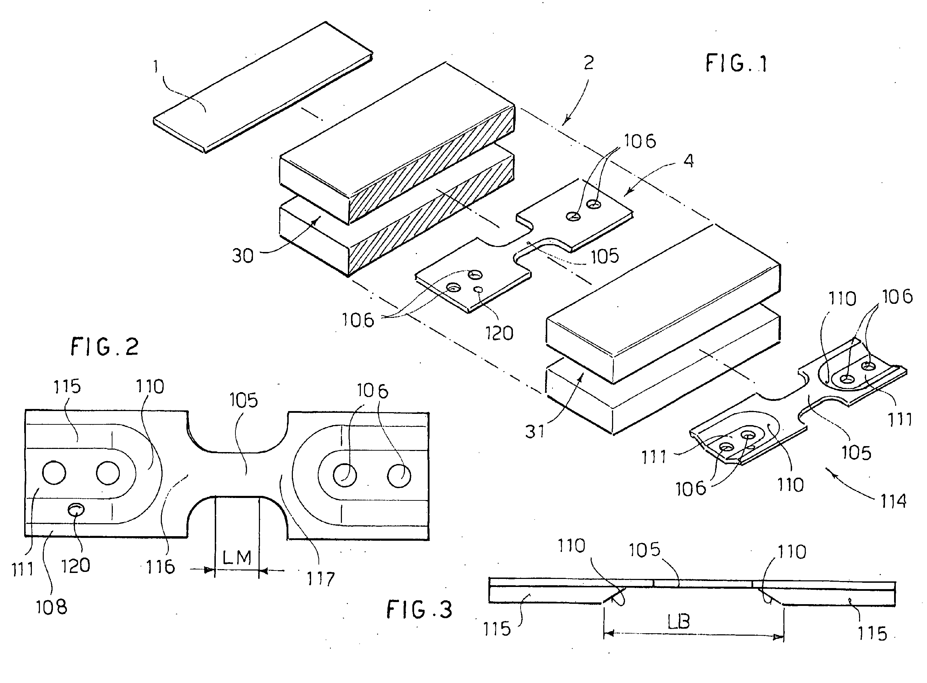

With reference to Figure 1 a process is illustrated for production of a link for measuring stresses in accordance with the invention.

The starting material is a band 1 of metal, such as, for example, steel, spring steel or aluminium.

The band 1 is inserted in a progressive die 2. The progressive die 2 is a single die with a plurality of impressions. Each impression performs a production phase, with progressive feeding. The production phases are blanking, drilling and drawing. The finished piece leaving the progressive die 2 is the link according to the invention.

When the band 1 enters the progressive die 2 it undergoes a blanking and drilling stage 30 in which its outer profile is blanked and holes are made in preferential parts. As shown in Figure 1, in an intermediate area of the die 2, at the end of the blanking and drilling stage 30, a flat plate 4 is obtained, with a profile substantially similar to that of the link that is to be obtained.

The plate 4 has a central area 105 with a smaller width than that of the other parts of the link, holes 106 for fastening of the link disposed in two end parts and a hole 120 for fastening an electric cable connected to a sensor intended to be positioned in the central area 105.

The blanked and drilled plate 4 is fed in the progressive die 2 toward a dishing or drawing phase 31 in which the plate 4 is positioned in a special impression and is drawn so as to obtain the particular shape of the link 114 according to the invention.

The drilling operation can also take place first at the blanking phase or after the drawing phase. At the outlet from the die 2 a finished link 114 is obtained.

As better shown in Figures 2-4, in the two end parts of the link, two fastening parts 111, depressed with respect to the remaining parts of the link 114, are obtained by means of drawing. A pair of holes 106 disposed along a longitudinal axis of the link 114 are provided in each fastening part 111.

A connecting part 110 obtained in the drawing phase is provided between each fastening part 111 and the central part 105. The connecting parts 110, seen from above, have a substantially semicircular shape.

Each connecting part 110 continues with two corridors 115 obtained in the drawing phase that laterally define the fastening part 111. The connecting part 110 and the corridors 115 seen from above are substantially U-shaped. At the sides of the corridors 115 are tongues 108, raised with respect to the fastening part 111. The tongues 108 allow a greater protection of the electric cable to be connected to the sensor.

Each supporting part 111 is flat and has a reduced thickness, equal to the thickness of the initial band 1. In a corridor 115 there is a hole 120 with a smaller diameter than the diameter of the holes 106.

With reference in particular to Figure 2, between the central part 105 and the connecting part 110 there is an area 116 on the left of the link having a larger surface than an area 117 between the central part 105 and the connecting part 110 on the right of the link. In fact the larger surface of the area 116 must be sufficiently large to be able to accommodate a printed circuit board intended to be connected to a sensor.

With reference to Figures 2 and 3, the length of the central area 105 is indicated by LM and the distance between the two connecting areas 110 is indicated by LB. Consequently the amplifying factor of the stress for the link 114 is given by K = LB/LM. In the present embodiment, by way of example, a link 114 can be obtained with LB equal to 50 mm and LM equal to 12 mm, consequently a stress amplifying factor of the normal stress equal to K = 4.17 is obtained.

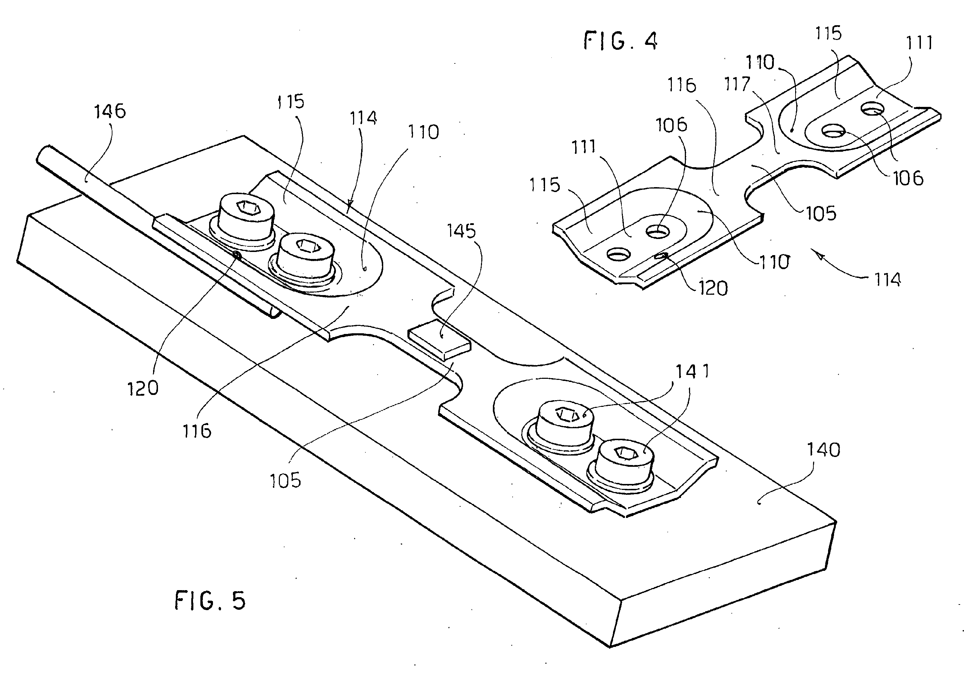

Figure 5 shows a structure 140 on which the stresses to which it is subjected are to be measured. The link 114 is fastened to the structure 140 by means of screws 141, which engage in the holes 106 in the link 114.

A sensor 145 is disposed in the central area 105 of the link 114. The sensor 145 can be positioned in the upper surface or in the lower surface of the central part 105 or in both surfaces. The sensor 145 is connected by means of printed circuit board cemented in the part beneath the region 116 to an electrical connection cable 146 fastened with a plastic clip to the hole 120. Said electrical cable 146 exits from the link 114.

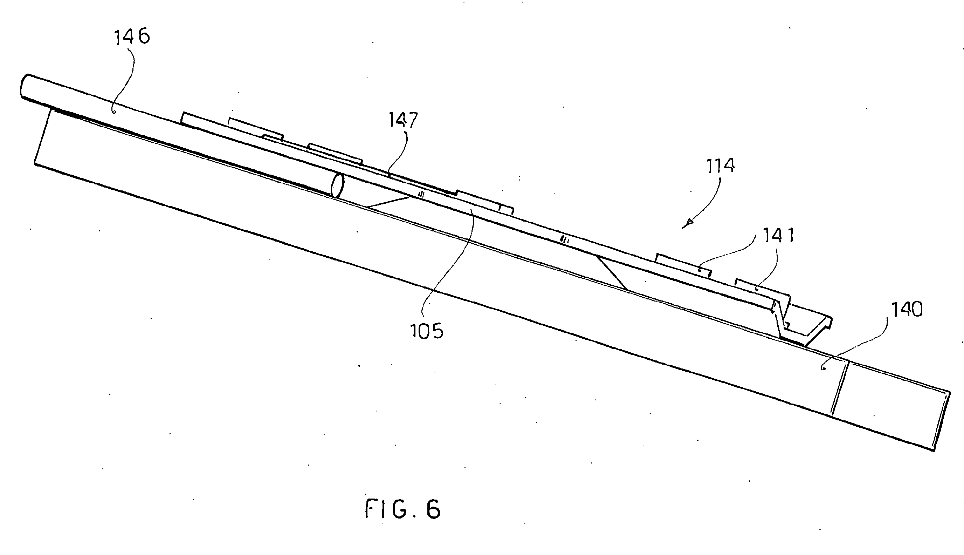

Figure 6 shows how the central area 105 of the link 114 is spaced from the upper surface of the structure 140.

Many variations and modifications of detail within the reach of a person skilled in the art can be made to the embodiment of the present invention, whilst still remaining within the scope of the invention as set forth in the appended claims.

## Claims

1. A process for the production of a link (114) for measuring the stresses on a structure (140), **the link comprising a central area (105) raised with respect to two flat end fastening parts (111),** the process comprising the following steps:
- blanking a plate (4) from a flat metal band (1), said plate (4) substantially reproducing the profile of the link **(114)** to be obtained
- drawing said blanked plate (4) so as to obtain said link (114) having said central area (105) that is raised with respect to two **flat** end fastening parts (111), **and connected to said fastening parts (111) by means of drawn connecting parts (110) which continue with two drawn corridors (115) disposed laterally with respect to the fastening parts (111) so that the connecting parts and the corridors are substantially U-shaped when seen from above.**

2. A process according to claim 1, wherein said blanking step comprises:
- the creation of holes (106) in said end fastening parts (111) to receive means (141) for fastening to said structure (140) and
- the creation of at least one hole (120) for a connection cable (146) from a sensor (145) disposed in said central area (105).

3. A process according to claim 1 or 2, wherein said drawing step comprises the formation of **the** two connecting areas (110) disposed between said fastening parts (111) and said central area (105).

4. A process according to any one of the preceding claims, wherein said link (114) is made by means of a progressive die (2) consisting of a single die with a plurality of impressions, in which each impression performs one production phase with progressive feeding.

5. A link (114) for measuring stresses on a structure (140), said link comprising two end fastening parts (111) depressed by means of drawing with respect to a central part (105) having a smaller width than the remaining parts of the link, **said central area (105) being connected to said fastening parts (111) by means of drawn connecting parts (110) which continue with two drawn corridors (115) disposed laterally with respect to the fastening parts (111) so that the connecting parts and the corridors are substantially U-shaped when seen from above.**

6. A link according to claim 5, wherein holes (106) are provided in said fastening parts (111) to receive screws (141) for fastening to the structure (140)

7. A link according to claim 5 or 6, wherein the thickness of said fastening parts (111) is substantially equal to the thickness of the remaining parts of the link.

8. A link according to claim 5, wherein said connecting parts (110) have a substantially semicircular shape when seen from above.

9. A link according to claim 5, wherein laterally to said corridors raised tongues (108) are provided, such as to act as a protection for an electrical cable connected to a sensor.

## Patentansprüche

1. Verfahren zur Herstellung eines Messglieds (114) zum Messen der Beanspruchungen auf einer Struktur (140), wobei das Messglied einen mittleren Bereich (105) umfasst, der gegenüber zwei flachen Endbefestigungsteilen (111) erhöht ist, wobei das Verfahren die folgenden Schritte umfasst:
- Ausstanzen einer Platte (4) aus einem flachen Metallband (1), wobei diese Platte (4) im Wesentlichen die Kontur des zu erhaltenden Messglieds (114) nachbildet,
- Tiefziehen der ausgestanzten Platte (4), um das Messglied (114) zu erhalten, das den mittleren Bereich (105) aufweist, der gegenüber den flachen Endbefestigungsteilen (111) erhöht ist, und mit diesen Befestigungsteilen (111) mittels tiefgezogener Verbindungsteile (110) verbunden ist, die mit zwei tiefgezogenen Gängen (115) fortgesetzt sind, die seitlich von den Befestigungsteilen (111) angeordnet sind, so dass die Verbindungsteile und die Gänge von oben gesehen im Wesentlichen U-förmig sind.

2. Verfahren nach Anspruch 1, bei dem der Schritt des Ausstanzens Folgendes umfasst:
- das Herstellen von Löchern (106) in den Endbefestigungsteilen (111) zur Aufnahme von Mitteln (141) zum Befestigen an der Struktur (140) und
- das Herstellen von mindestens einem Loch (120) für ein Verbindungskabel (146) von einem im mittleren Bereich (105) angeordneten Sensor (145).

3. Verfahren nach Anspruch 1 oder 2, bei dem der Schritt des Tiefziehens das Ausbilden von zwei Verbindungsbereichen (110) umfasst, die zwischen den zwei Befestigungsteilen (111) und dem mittleren Bereich (105) angeordnet sind.

4. Verfahren nach einem der vorhergehenden Ansprüche, bei dem das Messglied (114) mit Hilfe eines Folgewerkzeugs (2) hergestellt wird, das aus einem einzigen Werkzeug mit einer Vielzahl von Vertiefungen besteht, wobei jede Vertiefung eine Herstellungsphase mit fortschreitender Zuführung ausführt.

5. Messglied (114) zum Messen der Beanspruchungen auf einer Struktur (140), wobei dieses Messglied zwei Endbefestigungsteile (111) umfasst, die durch Tiefziehen gegenüber einem Mittelteil (105) herabgesetzt sind, das eine geringere Breite als die übrigen Teile des Messglieds hat, wobei dieser mittlere Bereich (105) mit den Befestigungsteilen (111) durch tiefgezogene Verbindungsteile (110) verbunden ist, die mit zwei tiefgezogenen Gängen (115) fortgesetzt sind, die seitlich von den Befestigungsteilen (111) angeordnet sind, so dass die Verbindungsteile und die Gänge von oben gesehen im Wesentlichen U-förmig sind.

6. Messglied nach Anspruch 5, bei dem in den Befestigungsteilen (111) Löcher (106) vorgesehen sind, um Schrauben (141) zum Befestigen an der Struktur (140) aufzunehmen.

7. Messglied nach Anspruch 5 oder 6, bei dem die Dicke der Befestigungsteile (111) im Wesentlichen gleich der Dicke der übrigen Teile des Messglieds ist.

8. Messglied nach Anspruch 5, bei dem die Verbindungsteile (110) von oben gesehen eine im Wesentlichen halbrunde Form haben.

9. Messglied nach Anspruch 5, bei dem seitlich von den Gängen erhöhte Zungen (108) vorgesehen sind, um als Schutz für ein mit einem Sensor verbundenes elektrisches Kabel zu dienen.

## Revendications

1. Un procédé pour la production d'une liaison (114) pour mesurer les contraintes sur une structure (140), la liaison comprenant une zone centrale (105) rehaussée par rapport à deux parties de fixation d'extrémité plates (111), le procédé comprenant les étapes suivantes :
- le découpage d'une plaque (4) à partir d'une bande métallique plate (1), ladite plaque (4) reproduisant sensiblement le profil de la liaison (114) à obtenir,
- l'étirage de ladite plaque découpée (4) de manière à obtenir ladite liaison (114) ayant ladite zone centrale (105) qui est rehaussée par rapport à deux parties de fixation d'extrémité plates (111), et connectée auxdites parties de fixation (111) au moyen de parties de connexion étirées (110) qui continuent avec deux couloirs étirés (115) disposés latéralement par rapport aux parties de fixation (111) de manière que les parties de connexion et les couloirs soient sensiblement en forme de U quand ils sont vus de dessus.

2. Un procédé selon la revendication 1, dans lequel ladite étape de découpage comprend :
- la création de trous (106) dans lesdites parties de fixation d'extrémité (111) pour recevoir des moyens (141) pour la fixation à ladite structure (140) et
- la création d'au moins un trou (120) pour un câble de connexion (146) provenant d'un capteur (145) disposé dans ladite zone centrale (105).

3. Un procédé selon la revendication 1 ou 2, dans lequel ladite étape d'étirage comprend la formation des deux zones de connexion (110) disposées entre lesdites parties de fixation (111) et ladite zone centrale (105).

4. Un procédé selon l'une quelconque des revendications précédentes, dans lequel ladite liaison (114) est réalisée au moyen d'un moule progressif (2) consistant en un unique moule avec une pluralité d'empreintes, dans lequel chaque empreinte effectue une phase de production avec alimentation progressive.

5. Une liaison (114) pour mesurer des contraintes sur une structure (140), ladite liaison comprenant deux parties de fixation d'extrémité (111) abaissées par étirage par rapport à une partie centrale (105) ayant une largeur inférieure à celle des parties restantes de la liaison, ladite zone centrale (105) étant connectée auxdites parties de fixation (111) au moyen de parties de connexion étirées (110) qui continuent avec deux couloirs étirés (115) disposés latéralement par rapport aux parties de fixation (111) de manière que les parties de connexion et les couloirs soient sensiblement en forme de U quand ils sont vus de dessus.

6. Une liaison selon la revendication 5, dans laquelle des trous (106) sont prévus dans lesdites parties de fixation (111) pour recevoir des vis (141) pour la fixation à la structure (140).

7. Une liaison selon la revendication 5 ou 6, dans laquelle l'épaisseur desdites parties de fixation (111) est sensiblement égale à l'épaisseur des parties restantes de la liaison.

8. Une liaison selon la revendication 5, dans laquelle lesdites parties de connexion (110) ont une forme sensiblement semi-circulaire quand elles sont vues de dessus.

9. Une liaison selon la revendication 5, dans laquelle des languettes rehaussées (108) sont disposées latéralement par rapport auxdits couloirs, de manière à agir comme une protection pour un câble électrique connecté à un capteur.
